# EUROPÄISCHE PATENTSCHRIFT

(11) **EP 0 882 636 B1**
(45) Veröffentlichungstag und Bekanntmachung des Hinweises auf die Patenterteilung: **29.08.2001**
(21) Anmeldenummer: 98110314.6
(22) Anmeldetag: 05.06.1998
(51) Int. Cl.: B62D 1/19, F16F 7/12

(54) **Lenksäule mit integriertem Crashelement**
Steering column comprising an impact-absorbing element
Colonne de direction comprenant un élément d'absorption de choc

(30) Priorität: 07.06.1997 DE 29709957 U
(43) Veröffentlichungstag der Anmeldung: 09.12.1998
(73) Patentinhaber: Bayerische Motoren Werke Aktiengesellschaft, 80788 München (DE)
(72) Erfinder: Faulstroh, Hans-Joachim, 86511 Schmiechen (DE); Promberger, Franz, 85238 Petershausen (DE); Meyle, Lothar, 74321 Bietigheim-Bissingen (DE); Schmid, Oliver, 71732 Tamm (DE)

(56) Entgegenhaltungen:
- WO-A-94/28334
- DE-A- 2 222 045
- DE-A- 2 232 836
- DE-A- 3 002 948
- FR-A- 2 165 512
- US-A- 4 019 403
- US-A- 4 255 986

## Beschreibung

Gegenstand der vorliegenden Neuerung ist eine Lenksäule mit integriertem Crashelement nach dem Oberbegriff des Anspruchs 1.

Es hat sich in der Praxis gezeigt, daß bei Auffahrunfällen in Fahrzeugen der Fahrer in Richtung Lenkrad bzw. Lenksäule gedrückt wird. In der Lenksäule wird hierbei eine Druckkraft aufgebaut, die abgefangen werden soll.

Es sind verschiedene Ausführungsformen von derartigen Lenksäulen bzw. Crashelemente bekannt geworden. So zeigt z. B. die US 4,019,403 eine Lenksäule mit zwei ineinander eingefügten, gegeneinander verschiebbaren Bauteilen. Das äußere Bauteil weist hierbei einen Hohlraum auf, der mit einem Dämpfungsmaterial gefüllt ist. Sobald eine Kraft von außen aufgebracht wird, werden die Bauteile gegeneinander verschoben. Das Dämpfungsmedium tritt hierbei durch eine Öffnung an der Rückseite des äußeren Bauteils aus.

Eine weitere Einrichtung nach dem Oberbegriff des Anspruchs 1 ist aus der US 4 255 986 bekannt. Die Konstruktion ist ähnlich wie bei der US 4,019,403. Der wesentliche Unterschied ist, daß das Dämpfungsmaterial nicht mehr frei im Bereich des Lenkrades austritt, sondern das äußere Bauteil mit einem zweiten, nicht gefüllten Hohlraum versehen ist. Dieser Hohlraum dient dazu, das bei einer Verschiebung aus dem ersten Hohlraum austretenden Dämpfungsmaterial kontrolliert aufzunehmen.

Bei beiden Ausführungsformen ist die Verbindung zwischen den beiden Bauteilen so gewählt, daß auch bei Erreichen einer gewissen Verschiebung der beiden Bauteile gegeneinander noch relativ hohe Bindungskräfte bestehen. Dies ist deutlich aus den Abbildungen der beiden Patentschriften erkennbar; die beiden Bauteile sind stets miteinander in Kontakt. Die für ein Verschieben der Bauteile gegeneinander benötigte Kraft bei einem Unfall ist derart hoch, dass Verletzungen des Fahrers nicht ausgeschlossen werden können. Die Verbindung reagiert weiter träge und mit Verzögerung.

Die DE 22 32 836 A zeigt eine Vorrichtung zur Absorption kinetischer Energie an Lenksäulen, wobei sich ein hinsichtlich seines Festigkeitswertes schwächeres Bauteil bei einer axialen Verschiebung auf das einen höheren Festigkeitswert aufweisende Bauteil schiebt und hierbei verformt.

Aufgabe der vorliegenden Erfindung ist es daher, eine Lenksäule der im Oberbegriff des Anspruchs 1 genannten Art dahingehend weiterzubilden, dass die bei einem Unfall auf den Fahrer wirkenden Kräfte wesentlich verringert werden.
Erfindungsgemäß wird dies dadurch gelöst, dass die Verbindung zwischen den Bauteilen (des Crashelementes) derart konisch ausgebildet ist, dass sich der Kontakt zwischen den beiden Bauteilen nach einer Verschiebung verringert.

Die beschriebene konische Verbindung hat den wesentlichen Vorteil, dass bereits bei einer geringen Verschiebung der Bauteile gegeneinander kein Kontakt mehr zwischen diesen besteht. Die bei dem Stand der Technik gemäß der obigen Ausführungen noch vorhandenen (bzw. sich ggf. sogar noch verstärkenden) Reibungskräfte werden somit reduziert bzw. entfallen vollständig. Es ist weiter vorgesehen, das Dämpfungsmaterial nicht mehr wie aus dem Stand der Technik bekannt einfach zu verdrängen, sondern ein Material zu verwenden, das sich unter Druck extrem rasch verflüssigt, pulverisiert oder kristallisiert. Hierdurch wird der Widerstand, den das Dämpfungsmaterial der Verschiebung entgegensetzt, erheblich reduziert. Als geeignetes Material können z.B. verschiedene Elastomere und Silikone verwendet werden. Bei der Auswahl des Materials muß darauf geachtet werden, daß dieses im gesamten Temperaturspektrum eines Fahrzeugs die gewünschten Eigenschaften aufweist.

Die Verbindung selbst kann reib- und/oder formschlüssig ausgebildet sein. Für den Formschluß können Vielnutprofile, Kerbzahnprofile, Polygonprofile oder andere geeignete Profile verwendet werden, als Reibschluß ist ein einfacher Kegelsitz möglich.

In einer bevorzugten Ausführungsform ist das innere Bauteil als Hohlwelle ausgebildet. Im Fall des Falles wird dann das pulverisierte, verflüssigte oder kristallisierte Dämpfungsmaterial nicht in den Innenraum des Fahrzeugs abgegeben, sondern nach vorne durch das innere Bauteil abgeführt.

Um einen bestimmten Kraftverlauf einzustellen oder eine Anpassung an unterschiedlichste Randbedingungen zu erreichen, kann das innere Bauteil in seinem Innenraum hierbei mit einer oder mehreren Blenden bzw. Stopfen versehen sein. Diese können wiederum mit einer oder auch mehreren Öffnungen versehen sein.

Der Hohlraum im äußeren Bauteil wird dann an der der Verbindung gegenüberliegenden Stelle auf geeignete Weise geschlossen. Es ist allerdings selbstverständlich ebenfalls möglich, den Hohlraum mit einer zerstörbaren Abdichtung auszustatten, so daß bei einer Verschiebung das verflüssigte, pulverisierte oder kristallisierte Dämpfungsmedium sowohl nach vorne als auch nach hinten austreten kann.

Der Erfindungsgegenstand der vorliegenden Neuerung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Neuerung anhand von zwei Ausführungswege darstellenden Zeichnungen näher erläutert. Hierbei gehen aus den Zeichnungen und ihrer Beschreibung weitere erfindungswesentliche Merkmale und Vorteile der Neuerung hervor.

Dabei zeigt:
- Figur 1:: Einen Querschnitt durch das neuerungsgemäße Crashelement;
- Figur 2:: Eine vergrößerte schematische Darstellung des inneren Bauteils;
- Figur 3:: Eine alternative Einbindung des Dämpfungsmaterials.

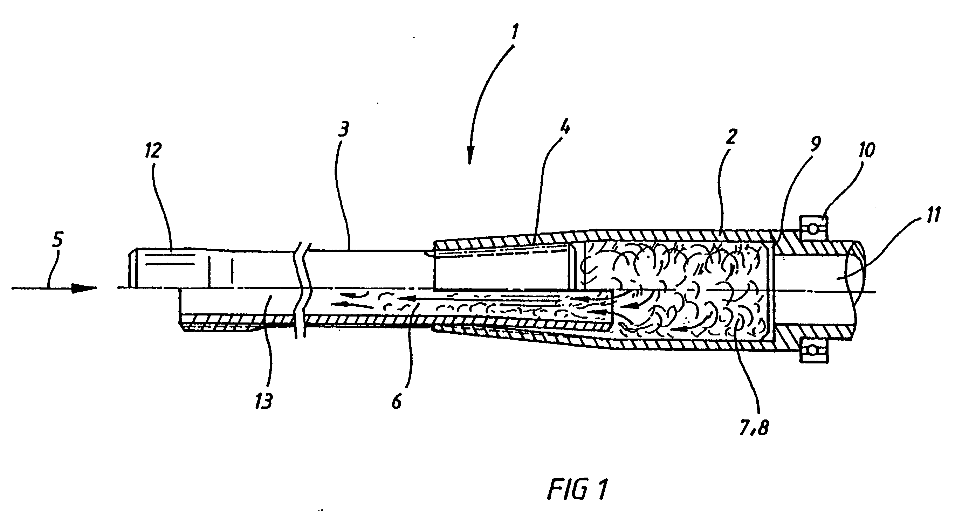

In Figur 1 ist in der oberen Hälfte der Zustand vor einer Verschiebung der Bauteile gegeneinander, in der unteren Hälfte der Zustand nach einer derartigen Verschiebung dargestellt. Das Crashelement 1 umfaßt ein äußeres Bauteil 2 sowie ein inneres Bauteil 3. Die Bauteile 2,3 sind über eine konische Verbindung 4 aneinandergekoppelt.

Die Verbindung 4 ist derart ausgebildet, daß sie eine Verschiebung des inneren Bauteils 3 gegenüber dem äußeren Bauteil 2 in Pfeilrichtung 5 als Einwirkung einer bestimmten Kraft zuläßt.

Das äußere Bauteil 2 weist hierbei einen Hohlraum 7 auf, der mit einem Dämpfungsmaterial 8 gefüllt ist. Der Hohlraum 7 ist durch eine Scheibe 9 oder einen Stopfen abgeschlossen.

Bei einer Verschiebung des inneren Bauteils 3 in Pfeilrichtung 5 wird dann das Dämpfungsmaterial pulverisiert, verflüssigt oder kristallisiert und tritt in Pfeilrichtung 6 durch den Innenraum 13 des inneren Bauteils 3 aus.

Das äußere Bauteil 2 kann hierbei über ein Lager 10 gelagert werden; es kann zu Gewichtsverringerungen mit einer Bohrung 11 versehen sein. Das innere Bauteil 3 trägt an seinem freien Ende einen Anschluß 12 zur Aufnahme weiterer Bauteile.

Es versteht sich von selbst, daß die Verbindung 4 im Normalzustand (obere Hälfte der Figur 1) die Bauteile 2,3 drehfest miteinander verbindet.

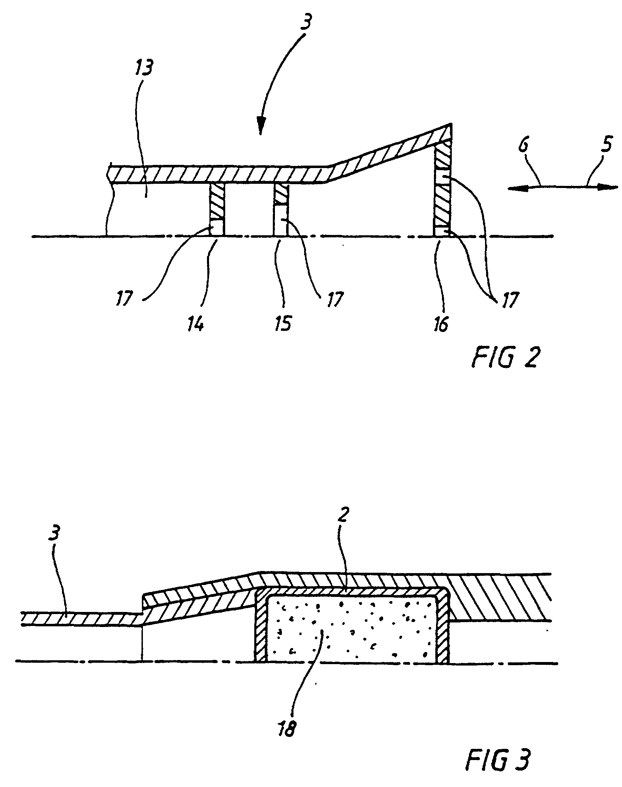

Figur 2 zeigt einen vergrößerten Ausschnitt des inneren Bauteils 3. Es ist deutlich erkennbar, daß im Innenraum 13 mehrere Blenden 14,15,16 angebracht sind. Diese Blenden sind jeweils mit einer oder mehrerer Öffnungen 17 versehen, um unterschiedliche Strömungsquerschnitte erzeugen zu können. Selbstverständlich sind diese Blenden nicht zwingend erforderlich; ihr Einsatzt sowie die Abmesssungen und die Anordnung hängen von den Randbedingungen ab.

Wie bereits eingangs ausgeführt, dienen diese Blenden 14-16 zusammen mit den Öffnungen 17 dazu, einen bestimmten Kraftverlauf über den Verschiebungsweg herzustellen.

Fig. 3 zeigt ein anderes Dämpfungselement 18, bei dem das Elastomer/Silikon gekapselt ist. Die Kapselung wird bei einer Verschiebung der Teile 2, 3 zueinander zerstört und gibt das Dämpfungsmaterial frei.

Insgesamt ergibt sich eine sehr viel einfachere Konstruktion, die darüber hinaus wesentlich rascher anspricht als die Konstruktionen nach dem Stand der Technik.

## Patentansprüche

1. Lenksäule mit integriertem Crashelement (1), bestehend aus einem äußeren Bauteil (2), das innenseitig mit einem inneren Bauteil (3) derart verbunden ist, dass sich die Bauteile (2,3) bei Einwirkung einer Kraft in Längsrichtung gegeneinander verschieben können, wobei dann das innere Bauteil (3) in einen mit einem Dämpfungsmaterial (8) gefüllten Hohlraum (7) des äußeren Bauteils (2) eindringt und sich durch den daraus resultierenden Druck das Dämpfungsmaterial (8) verflüssigt, pulverisiert oder kristallisiert,
**dadurch gekennzeichnet**, dass die Verbindung (4) zwischen den Bauteilen (2,3) derart konisch ausgebildet ist, dass sich der Kontakt zwischen den beiden Bauteilen (2, 3) nach einer Verschiebung verringert.

2. Lenksäule nach Anspruch 1, **dadurch gekennzeichnet,** daß die Verbindung (4) reib- und/oder formschlüssig ausgebildet ist.

3. Lenksäule nach Anspruch 1 oder 2, **dadurch gekennzeichnet,** daß für die Verbindung (4) ein Vielnutprofil, ein Kerbzahnprofil, ein Polygonprofil, ein Kegelsitz oder ähnliche Formgebungen verwendet werden.

4. Lenksäule nach einem der Ansprüche 1-3, **dadurch gekennzeichnet,** daß das innere Bauteil (3) als Hohlwelle ausgebildet ist.

5. Lenksäule nach Anspruch 4, **dadurch gekennzeichnet,** daß der Innenraum (13) des inneren Bauteils (3) mit einer oder mehreren Blenden (14-16) mit zugeordneten Öffnungen (17) versehen ist.

6. Lenksäule nach einem der Ansprüche 1-5, **dadurch gekennzeichnet,** daß der Hohlraum (7) des äußeren Bauteils (2) gegenüberliegend dem inneren Bauteil (3) durch eine Scheibe (9) geschlossen ist.

7. Lenksäule nach einem der Ansprüche 1-6, **dadurch gekennzeichnet,** daß das Dämpfungsmaterial (8) gekapselt ist.

## Claims

1. A steering column with an integrated impact absorbing element (1) comprising an outer component (2), which is joined on its inner side with an inner component (3) such that the components (2, 3) can slide against each other under the effect of a force in the longitudinal direction, whereby then the inner component (3) is forced into a hollow space (7) filled with damping material (8) in the outer component (2) and owing to the pressure resulting from this the damping material (8) liquifies, pulverises or crystallises,
**characterised in that** the joint (4) between the components (2, 3) is conically constructed such that the contact between the two components (2, 3) reduces following a sliding movement.

2. A steering column according to Claim 1, **characterised in that** the joint (4) is configured as friction fitting and/or form fitting.

3. A steering column according to Claim 1 or Claim 2, **characterised in that** a multi-groove profile, a serrated profile, a polygonal profile a cone mounting or similar construction can be employed for the joint (4).

4. A steering column according to one of the Claims 1 to 3, **characterised in that** the inner component (3) is configured as a hollow shaft.

5. A steering column according to Claim 4, **characterised in that** the inner space (13) of the inner component (3) is provided with one or more vanes (14 - 16) with associated apertures (17).

6. A steering column according to one of the Claims 1 to 5, **characterised in that** the hollow space (7) of the outer component is sealed by a disc (9) at the opposite end to the inner component (3).

7. A steering column according to one of the Claims 1 to 6, **characterised in that** the damping material (8) is encapsulated.

## Revendications

1. Colonne de direction intégrant un élément de protection contre les collisions (1) formé d'un composant extérieur (2) relié par son côté intérieur avec un composant intérieur (3) de façon que les deux composants (2, 3) puissent coulisser l'un par rapport à l'autre dans la direction longitudinale sous l'action d'une force, le composant intérieur (3) pénétrant dans une cavité (7) du composant extérieur (2), chargée de matière d'amortissement (8) et la matière d'amortissement (8) se liquéfie et de pulvérise ou se cristallise sous la pression résultante,
**caractérisée en ce que**
la liaison (4) entre les composants (2, 3) est conique de façon que le contact entre les deux composants (2, 3) diminue après un coulissement.

2. Colonne de direction selon la revendication 1,
**caractérisée en ce que**
la liaison (4) est une liaison par friction et/ou par la forme.

3. Colonne de direction selon la revendication 1 ou 2,
**caractérisée en ce que**
la liaison (4) comporte un profil à rainures multiples, un profil à denture à encoches, un profil polygonal, un siège conique ou une forme de ce type.

4. Colonne de direction selon l'une des revendications 1 à 3,
**caractérisée en ce que**
le composant intérieur (3) est un arbre creux.

5. Colonne de direction selon la revendication 4,
**caractérisée en ce que** le volume intérieur (13) du composant intérieur (3) est muni d'un ou plusieurs diaphragmes (14, 16) ayant des orifices (17) correspondants.

6. Colonne de direction selon l'une quelconque des revendications 1 à 5,
**caractérisée en ce que**
la cavité (7) du composant extérieur (2) est fermée par une rondelle (9) par rapport au composant intérieur (3).

7. Colonne de direction selon l'une quelconque des revendications 1 à 6,
**caractérisée en ce que**
la matière d'amortissement (8) est encapsulée.
